# EUROPEAN PATENT APPLICATION

(11) **EP 1 942 199 A1**
(43) Date of publication of application: **09.07.2008**
(21) Application number: 06425850.2
(22) Date of filing: 20.12.2006
(51) Int. Cl.: C14C 11/00, C09D 133/06

(54) **Leather coated with aqueous composition comprising methacrylic resin**

(71) Applicant: Grado Zero Espace S.r.l., 50053 Empoli FI (IT)
(72) Inventor: Pagliai, Filippo, 50050 Cerreto Guidi FI (IT)
(74) Representative: Perani, Aurelio

(57) **Abstract**

The present invention relates to leather of animal origin having improved aesthetic and technical features that are obtained by treating with an aqueous composition comprising at least 30% of a methacrylic resin at a pH value of about 8, and by sequential drying, cooling and fixing cycles. The leather according to the invention has lightweightness, flexibility, optimum visual/aesthetic effect and softness to the touch, average transpirability, good chemical and flame resistance, optimum resistance to abrasion and UV-A and UV-B radiations.

## Description

The present invention relates to treated leather of animal origin having improved aesthetic and technical features. Particularly, the invention relates to high-performing leather and a process for obtaining the same.

According to the present invention, by "leather" is meant all the types of leather of animal origin: harsh, raw, tanned, waterproofed, aniline, vegetable processed, full-grain or buffed leather.

The final appearance of the leather products is known to be given by the finishing operations, which comprise several mechanical treatments or the application of surface coatings. The type of finishing process is selected on the final product requirements, as well as the use thereof.

Particularly, the object of the application of a surface coating is mainly to provide a protection against external agents (water, oil, abrasive agents, UV rays, flame), to provide a colour either for changing or enhancing the dyeing colour, to uniform the colour or to conceal defects, to change the tactile and gloss performances or to create fashion or fantasy effects.

Several methods are known for applying the finishing coating, which are often used in combination with each other to obtain the desired effect on the finished product. The following methods for applying a coating are mainly:
- pad- or brush-application of the finishing mixture on the leather surface,
- application of a sprayed layer, which consists in spraying the finishing mixture by means of compressed air guns in spray booths,
- curtain finishing, which consists in coating the leather with a curtain of the finishing mixture,
- finishing by a roll coating machine, which consists in applying the finishing mixture by means of a roll,
- transfer finishing, which consists in transferring a film/foil on the leather previously treated with an adhesive.

It is also known that, in case of final products requiring high technical performances, such as good water repellency, high chemical and flame resistance, high abrasion resistance, high resistance to UV-A and UV-B radiation, such known treatments provide the leather with a hardening and stiffening effect, which is as much evident as the leather thickness is reduced, as well as a general little natural appearance that results in the final product being technically valuable, but poor in terms of transpirability, comfort and aesthetic appeal.

It is further known that the main emission source of organic solvents of the tanning industry originates from said finishing operations.

It is therefore felt the need of a process for treating leather that is capable of providing the desired technical features, while maintaining the comfort and natural appearance.

The object of the present invention is thus to provide a leather that is lightweight, flexible, having natural appearance and soft to the touch, having average transpirability, good chemical and flame resistance, optimum resistance to abrasion and UV-A and UV-B radiations.

It is another object of the present invention to provide a process for preparing said leather that has low environmental impact.

The above objects have been achieved by means of a process for treating leather of animal origin as set forth in claim 1. Further advantages and preferred embodiments of the invention are indicated in the dependent claims.

The leather according to the invention can be obtained by a process comprising a treatment step with an aqueous composition, comprising at least 30% of methacrylic resin, and subsequent drying, cooling and pressing steps.

Further characteristics and advantages of the invention will result from the following detailed description made with reference to the exemplary embodiments of the invention that are given by way of illustrative and non-limiting examples.

In the present invention, by percentages referred to the composition are meant percentages by weight on the total weight of the composition.

The subject of the invention is accordingly a leather of animal origin obtainable by the process comprising the steps of:
a) coating the leather surface with an aqueous composition comprising at least 30% methacrylic resin and suitable excipients;
b) drying the coated leather of step a) at a temperature of 60 to 100°C for a time of no more than 30 minutes;
c) cooling the leather of step b) to room temperature;
d) pressing the so-cooled leather at a temperature of 100 to 160°C; and
e) letting the so-obtained leather of step d) to cool to room temperature.

By "room temperature" is meant a temperature of 15 to 30°C.

Leathers suitable for treatment according to the present invention are all leathers of animal origin. Preferably, the leathers to be treated according to the invention are leathers that have been subjected to a tanning treatment in order to have a conveniently porous surface so that to advantageously obtain a suitable penetration and consequent good fixation of the composition of step a) of the above process into the leather itself.

According to the present invention, the step a), in fact, provides the coating of the leather by means of an aqueous composition comprising at least 30% of methacrylic resin and suitable excipients.

Preferably, the aqueous composition of step a) of the invention comprises 30% to 60% of a methacrylic resin. More preferably, said methacrylic resin is a methacrylate ester polymer of formula I 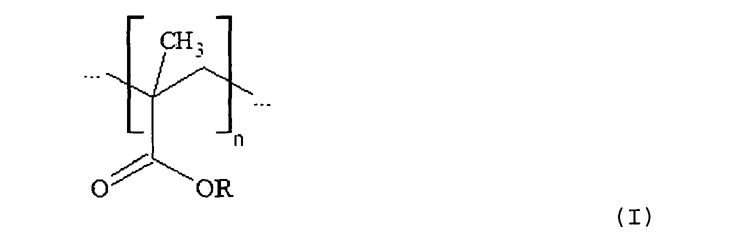 wherein R is selected from the group consisting of H, C₁-C₄ alkyl group, Na, K and mixtures thereof. Among the suitable excipients, all agents capable of increasing the solubility of the methacrylic resin in water are meant to be included. Preferably, the water-based composition comprises one or more alcohols selected from C₂-C₁₀ alcohols as the suitable excipients, more preferably in amounts not greater than 10%. Even more preferably, these suitable excipients are one or more alcohols selected from the group consisting of 2-butoxyethanol, ethanol, 2-methyl-2-propanol and 1-butanol.

It is further preferred that the composition of step a) has a pH of 7 to 8.5. Preferably, the pH is about 8.

Advantageously, among the suitable excipients, the composition of step a) comprises an antibacterial agent. Preferably, such an antibacterial agent is ammonia, as it, at the same time, conveniently contributes towards bringing the composition pH to the desired values. The amount of antibacterial agent is preferably not greater than 1%.

In step a), said composition is deposited at a surface density of 150 to 750 g/m².

This coating of step a) can be carried out according to methods known in the art. For the purposes of the present invention, however, spray coating is preferred, in that it allows a more uniform and homogeneous coating the surface of the leather to be treated with the composition.

As far as the step b) is concerned, the drying at a temperature of 60 to 100°C is preferably carried out in a time of 2 to 10 minutes. For the purposes of the present invention, such a temperature is preferably of 70 to 90°C, more preferably of about 80°C for a time of about 5 minutes.

Suitable devices for the step b) of drying comprise ovens of a suitable sizes.

The length of step c) of cooling the leather to room temperature depends on the temperature at which the leather has been left to dry. In order to advantageously speed up the cooling of the leathers, it is preferred to use a rotary chain moving system which allows to obtain an even cooling in a time range of few hours, preferably and conveniently about 2 hours.

The step d) of pressing provides that the leather cooled in step c) is pressed. This pressing can be carried out according to known methods at a temperature of 100 to 160°C. Preferably, the pressing temperature is of 110 to 130°C, even more preferably, this temperature is of about 120°C.

For the purposes of the present invention, at least one press roll is preferred as suitable means for pressing. Even more preferably, the leather is passed through two or more press rolls.

In the step d) of the present invention, a layer of antistick material is provided between the leather surface and the surface of the means, which during pressing contacts said leather surface. This layer has a mostly physical barrier function capable of preventing the leather from the risk that the composition may be transferred to the surface of the pressing means due to the applied heat. More preferably, this layer of antistick material is a antistick film. Prior to the pressing of step d), the antistick film can be conveniently laid throughout the surface of the cooled leather of step c). Alternatively, the surface of the selected pressing means can be coated; particularly, the surface of the one or more press rolls can be coated.

According to a preferred embodiment of the invention, the sequence of steps a), b) and c) is carried out at least twice prior to step d), more preferably this sequence is carried out 5 times prior to step d). Thereby, the amount of composition laid on the leather surface can be conveniently increased by stratification in order to obtain a final product having different technical features and different comfort levels according to the requirements. In this embodiment of the process, said composition is deposited in amounts of 30 to 150 g/m², preferably about 70 g/m² per each coating cycle.

As far as the step e) is concerned, the time taken for cooling to room temperature after the pressing step d), similarly to the step b) described above, depends on the temperature and time of pressing. In the advantageous embodiment wherein a layer of antistick material is put on the leather, the leather is left to stand so-covered for about one day. More preferably, after this time has elapsed and after the antistick material has been removed, the leather so obtained is left to stand for more two days.

In another aspect, the invention therefore concerns an improved leather obtainable from the process according to claim 20.

According to the present invention, preferably, this leather improved according to the process described above has a thickness not greater than 6 mm. Even more preferably, the leather has a thickness not greater than 4 mm. These reduced thicknesses of the leather together with the treatment with the composition according to the invention allow to obtain a lightweight leather, soft and comfortable to the touch, which surprisingly has lightness, flexibility, optimum visual/aesthetic effect and softness to the touch, average transpirability, good chemical and flame resistance, optimum resistance to abrasion and UV-A and UV-B radiations.

According to a further aspect, the invention relates to garments that are partially or totally manufactured with the leather obtained from the process described above according to claim 23. These garments are preferably technical garments both for use in work or industrial environments, and for use in leisure time and sports. Particularly, such a leather can be used to manufacture motorcycle or car technical clothing, and technical sportswear in general.
The invention will be now described in detail, in an illustrative and non limiting way, with reference to the examples of treatment of the leather of animal origin and assessment tests on the improved technical features of the same.

### EXAMPLES

### EXAMPLE 1 - Process for treating the leather of animal origin

On a ram leather sample subjected to a natural tanning, sized 0.6 m x 0.8 m and 4 mm thick has been coated by spraying by means of a spray-gun with an amount of 70 g/m² of a coating of the following aqueous composition having a pH of about 8:
- polymethacrylate 49%
- 2-butoxy-ethanol 3**.**7%
- 2-methyl-2-propanol 0.18%
- 1-butanol 0.13%
- ammonia 0.20%

The treated leather has been placed within a forced-air oven brought to a temperature of 80°C for a time of 5 minutes. The cooling has been carried out by using a rotary chain leather moving system, and the leather has been left to cool to room temperature for a time of about 2 hours. The sequence of the steps carried out so far has been repeated 4 times. A antistick film sheet has been then laid on the whole leather surface. The subsequent pressing step has been then carried out by using a roll that has been brought to a temperature of 120°C.

The so-obtained leather has been left to stand for about 1 day, then the transparent film sheet has been removed. The leather has been left to stand for more two days.

### COMPARATIVE EXAMPLE 2 - Preparation of 2 comparison leathers

A ram leather sample having the same size and thickness as the sample of the Example 1 has been subjected to natural tanning and "light finishing" (Sample B).

Another ram leather sample having the same size as the sample of the Example 1 has been subjected to natural tanning, then waterproofed through lacquering and subjected to "heavy finishing" (Sample C).

These samples B and C have the features of the highest performing leather available on the market.

### EXAMPLE 3 - Test of colour fastness to artificial light

The present test has been carried out on a sample A of leather of the Example 1, on a sample B and on a sample C of comparison leather of the Example 2, in accordance with UNI EN ISO 105-B02: 2004 standard (Colour fastness to artificial light - Xenon arc fading lamp).

By "colour fastness" is meant the resistance of leather colour to the action of artificial light.

The test has been carried out according to the above standard, under the following conditions:
- sample conditioning: 1 day at 23 ± 2°C at 50 ± 5% HR
- test conditions: 23 ± 2°C at 50 ± 5% HR
- exposure time: 72 hours

The results, referred below, have been evaluated according to the grey scale as provided in the ISO 105-A02: 1993 standard:
- sample A: 4/5 (very slight colour loss);
- sample B: 1/2 (severe colour loss);
- sample C: 5 (colour unchanged)

By comparing the above values, it can be seen that the leather of sample A obtained according to the Example 1 has a colour fastness that is significatively higher than that exhibited by the comparison leather of sample B obtained according to the Example 2, and it results comparable to that of sample C.

### EXAMPLE 4 - Determination of abrasion resistance by the Martindale method

The present test has been carried out on a leather sample A of the Example 1, on a sample B and on a sample C of comparison leather in the Example 2, in accordance with the UNI EN ISO 20344: 2004 standard.

Wool fabric has been used as abrasive material, at an operating pressure of 12 kPa.

The evaluation of the abrasion resistance of the three samples has been carried out at different inspection intervals. The conditions of each sample have been visually observed at each of these inspection intervals (or number of cycles). The results of this test are shown in the Table 1 below.

**Table 1**

| No. cycles | Sample A | Sample B | Sample C |
|---|---|---|---|
| 1600 | No abrasion | Slight abrasion | No abrasion |
| | | (about 10% surface) | |
| 3200 | No abrasion | Moderate abrasion (about 30% surface) | No abrasion (gloss loss) |
| 6400 | No abrasion | High abrasion (about 80% surface) | No abrasion (gloss loss) |
| 12800 | No abrasion | Complete abrasion | No abrasion (gloss loss) |
| 25600 | No abrasion | // | No abrasion (gloss loss) |

From the comparison of the results shown in the table, it has been observed that the sample A is advantageously very resistant to abrasion even at a very high number of cycles, similarly to sample C, which however exhibits an undesired gloss loss. On the other hand, the sample B exhibited a very poor abrasion resistance, thus showing a very low performances.

### EXAMPLE 5 - Determination of water penetration resistance

The present test has been carried out on leather samples A of the Example 1, on a sample B and on a comparison leather sample C of the Example 2 in accordance with the UNI EN ISO 5403: 2006 standard (Determination of water resistance of flexible leather).

The results of this test are shown in the Table 2 below.

**Table 2**

| | Water penetration time(minutes) | Water absorption (%) | Oscillation amplitude (%) |
|---|---|---|---|
| Sample A | 5 | 33.6 | 10 |
| Sample B | 1 | 74.4 | 10 |
| Sample C | 7 | 41.1 | 10 |

As it has been observed from the above results, the sample A had a high resistance to water penetration as compared with sample C, the sample B being particularly disadvantageous. The result for sample A is yet more advantageous in that sample C, which had been subjected to heavy finishing, resulted to be much thicker than sample A according to the invention. The latter thus appeared to be particularly convenient, as it could keep a high water penetration resistance while having an advantageously reduced thickness.

### EXAMPLE 6 - Flammability test

The present test has been carried out on a leather sample of the Example 1, in accordance with the US standard 16 CFR 1610 (Standard for the Flammability of clothing textiles).

The results of this test have demonstrated that the leather of the invention belonged to the Class 1 of the classification provided in said regulation. Said Class 1 identifies those tissues that show less tendency to flame. Surprisingly and conveniently, the leather of the invention not only fell within this class, but also proved to be nonflammable.

### EXAMPLE 7 - Determination of water vapour permeability

The present test has been carried out on a leather sample of the Example 1, on a sample B and on a comparison leather sample C of the Example 2 in accordance with the UNI EN ISO 14268: 2006 standard.

The set operating conditions were: 17 hours conditioning at 23 ± 2°C at 50 ± 5% HR, followed by 8 hours test at 23 ± 2°C at 50 ± 5% HR.

All samples have been subjected to the test as such, without previous surface abrasion.

The results of this test are set forth in the Table 3 below:

**Table 3**

| | Water vapour permeability (mg/cm²×h) |
|---|---|
| Sample A | 0.5 |
| Sample B | 22.5 |
| Sample C | 0.4 |

The above results have shown that the water vapour permeability of sample A of the invention is considerably lower than that of sample B, while being comparable with that of sample C, which has a thickness being disadvantageously higher than sample A of the invention, as stated above.

From the example discussed above, surprising results appear to be achieved by the leather that was treated according to the invention, wherein the combination between the composition applied to the surface and the selection of process parameters is resulted to be extremely advantageous in terms of performance enhancement. In fact, the leather according to the invention is resulted to have average transpirability, good water repellency, good chemical and flame resistance, high resistance to abrasion and UV-A and UV-B radiations, while being at the same time lightweight, due to the conveniently reduced thickness, to which the process allows the same to be processed, flexible, aesthetically natural, soft and comfortable to the touch.

Furthermore, by using said aqueous composition in the process according to the invention for treating the leather has shown to be surprisingly advantageous not only from the point of view of the technical and aesthetical performances given to the final leather, but also from the point of view of the reduced environmental impact, in that this composition comprises a high amount of water as the solvent and minimum ratios of alcoholic solvents. Therefore, the present invention also provides a solution to the environmental problems caused by the prior art processes, which produced noxious emissions of organic solvents during the finishing operations.

## Claims

1. A process for treating leather of animal origin comprising the steps of:
a) coating the leather surface with an aqueous composition comprising at least 30% methacrylic resin and suitable excipients;
b) drying the coated leather of step a) at a temperature of 60 to 100°C for a time of no more than 30 minutes;
c) cooling the leather of step b) to room temperature;
d) pressing the so-cooled leather at a temperature of 100 to 160°C; and
e) letting the so-obtained leather of step d) to cool to room temperature.

2. The process according to claim 1, wherein in step a), said aqueous composition comprises 30% to 60% of methacrylic resin.

3. The process according to claim 1 or 2, wherein in step a), said methacrylic resin is a methacrylate ester polymer of formula I 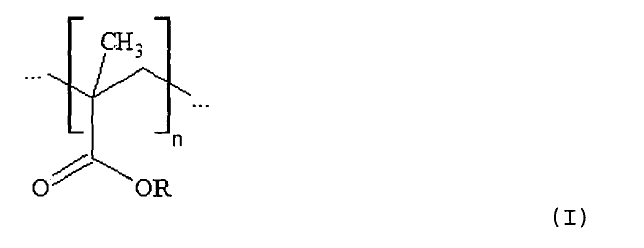 wherein R is selected from the group consisting of H, C₁-C₄ alkyl group, Na, K and mixtures thereof.

4. The process according to any one of claims 1-3, wherein in step a) the composition is deposited in amounts of 150 to 750 g/m².

5. The process according to any one of claims 1-4, wherein in step a) the composition is deposited by spraying.

6. The process according to any one of claims 1-5, wherein in step b) the temperature is of 70 to 90°C for a time of 2 to 10 minutes.

7. The process according to claim 6, wherein the cooling temperature in step b) is of 80°C, preferably for a time of 5 minutes.

8. The process according to any one of claims 1-7, wherein in step d) the pressing temperature is of 110 to 130°C, preferably 120°C.

9. The process according to any one of claims 1-8, wherein step d) is carried out by means of at least one press roll.

10. The process according to any one of claims 1-9, wherein in step d), a layer of antistick material is provided between the treated surface of the leather and the surface of the means used for pressing.

11. The process according to claim 10, wherein said layer of antistick material is a antistick film sheet.

12. The process according to any one of claims 1-11, wherein the sequence of steps a), b) and c) is carried out at least twice prior to step d), preferably five times.

13. The process according to claim 12, wherein per each carrying out of the sequence, the composition of step a) is deposited in amounts of 30 to 150 g/m².

14. The process according to claim 13, wherein per each carrying out of the sequence, the composition of step a) is deposited in amounts of about 70 g/m².

15. The process according to any one of claims 1-14, wherein the aqueous composition of step a) comprises 30% to 60% of polymethacrylate.

16. The process according to any one of claims 1-15, wherein the aqueous composition of step a) comprises one or more C₂-C₁₀ alcohols as suitable excipients.

17. The process according to claim 16, wherein the aqueous composition of step a) comprises one or more C2-C10 alcohols in an amount not greater than 10%.

18. The process according to claim 16 or 17, wherein one or more alcohols are selected from the group consisting of 2-butoxyethanol, ethanol, 2-methyl-2-propanol and 1-butanol.

19. The process according to any one of claims 1-18, wherein the composition of step a) further comprises an antibacterial agent in amounts not greater than 1%.

20. The process according to claim 19, wherein said antibacterial agent is ammonia.

21. An improved leather obtainable from the process according to any one of claims 1-20.

22. The leather according to claim 21, which has a thickness equal to or lower than 6 mm.

23. The leather according to claim 22, which has a thickness equal to or lower than 4 mm.

24. A garment manufactured, either partially or completely, with the leather according to any one of claims 21-23.
